# EUROPEAN PATENT SPECIFICATION

(11) **EP 3 641 150 B1**
(45) Date of publication and mention of the grant of the patent: **18.08.2021**
(21) Application number: 18819870.9
(22) Date of filing: 15.06.2018
(51) Int. Cl.: H04B 7/0413, H04B 7/0404, H04B 7/06, H04W 72/04

(54) **BEAM TRAINING METHOD, INITIATOR DEVICE, AND RESPONDER DEVICE**
STRAHLTRAININGSVERFAHREN, INITIATORVORRICHTUNG UND RESPONDER-VORRICHTUNG
PROCÉDÉ D'APPRENTISSAGE DE FAISCEAU, DISPOSITIF D'INITIATION ET DISPOSITIF DE RÉPONSE

(30) Priority: 20.06.2017 CN 201710469882
(43) Date of publication of application: 22.04.2020
(73) Proprietor: Huawei Technologies Co., Ltd., Longgang District Shenzhen, Guangdong 518129 (CN)
(72) Inventor: LI, Yanchun, Shenzhen Guangdong 518129 (CN)
(74) Representative: Pfenning, Meinig & Partner mbB
(86) International application number: PCT/CN2018/091577
(87) International publication number: WO 2018/233568

(56) References cited:
- WO-A1-2016/018168
- CN-A- 106 804 043
- US-A1- 2011 064 033
- US-A1- 2016 165 574
- US-A1- 2017 085 306
- OPPO: "Discussion on analog beamforming for NR MIMO", 3GPP TSG-RAN WG1 meeting #86 R1-166611, no. R1-166611, 21 August 2016 (2016-08-21) , XP051141880, Gothenburg, Sweden

## Description

### TECHNICAL FIELD

This application relates to the communications field, and in particular, to a beam training method, an initiator device, and a responder device.

### BACKGROUND

A multiple-input multiple-output (multiple-input multiple-output, MIMO) technology is a technology for communication by using a directional beam. To be specific, a transmit end concentrates transmission energy in a particular direction, and distributes little energy in other directions, to improve an antenna gain.

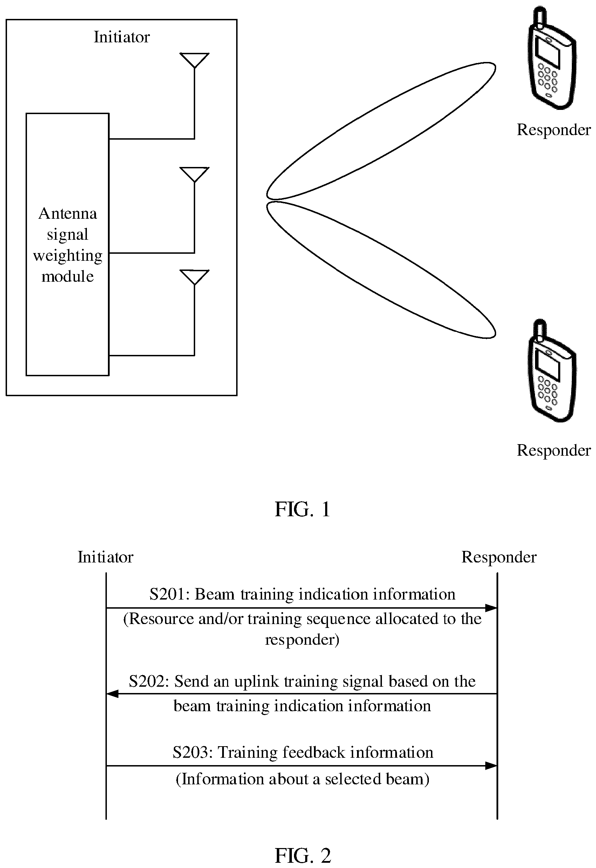

FIG. 1 shows a MIMO system. A network device includes a plurality of antenna elements and one or more antenna signal weighting modules. The antenna signal weighting module may adjust an antenna signal weight vector (antenna weight vector) in a digital or analog manner; or adjust the antenna signal weight vector in a combination of a cascading manner and either a digital manner or an analog manner. The antenna signal weight vector determines a beam direction for receiving and sending a signal.

Beam training is a process in which a network device and a station (station, STA) agree on a training sequence, a transmitter sends a signal by using the agreed training sequence, and a receiver obtains information about a channel between the network device and the STA based on the received signal, then determines an antenna signal weight vector based on the information about the channel, and further determines an optimal beam direction for receiving and sending a signal. Currently, uplink beam training in the MIMO system is initiated by the STA, resulting in low efficiency of the beam training.
US2017085306A1 discloses that new wireless networks can perform enhanced beamforming training for a multiple access technique, such as orthogonal frequency division multiple-access (OFDMA). The configurations of the stations and the networks presented herein provide a multiple-station beam refinement protocol (MSBRP) that may be used to train the transmit end and/or the receive end for the stations in a dense wireless local area network (WLAN). The MSBRP can have at least two phases. The first phase concurrently trains the receive side of multiple responder stations from one set of training signals sent from an initiator station. Then, each responder station can send training signals to the initiator station in a set of ordered phases associated with each responder station. The MSBRP eliminates inefficiencies associated with conducting multiple BRPs that include only pairs of stations.
US2011064033A1 discloses a millimeter-wave communication station and method for scheduling association beamforming training (A-BFT) with collision avoidance. An initiating station transmits a transmit sector-sweep frame in each of its antenna sectors and receives a reverse transmit sector-sweep frame from two or more unassociated responding stations. The initiating station transmits a sector-sweep feedback frame to each of the responding stations to indicate whether each responding station is to perform beamforming training in a current beacon interval or a subsequent beacon interval. The sector-sweep feedback frame may indicate an order in which the responding stations are to perform beamforming training in subsequent beacon intervals.

### SUMMARY

This application provides beam training methods, an initiator device, and a responder device according to the independent claims 1, 7, 12 and 13, to implement beam training performed by a responder scheduled by an initiator. In this way, the initiator coordinates with the responder, to perform training on a transmit beam or a receive beam, thereby achieving higher efficiency. The invention is defined by the independent claims 1, 7, 12 and 13. Preferred embodiments of the invention are stipulated in the dependent claims. Embodiments and/or examples mentioned in the description that do not fall under the scope of the claims are useful for understanding the invention.

### BRIEF DESCRIPTION OF DRAWINGS

FIG. 1 is an example diagram of a MIMO system;
FIG. 2 is a flowchart of a beam training method according to an embodiment of this application;
FIG. 3 is a schematic diagram of a frame structure in which a beam training method according to an aspect of this application is applied to a communications scenario of a cellular network;
FIG. 4 is a schematic diagram of another frame structure in which a beam training method according to an aspect of this application is applied to a communications scenario of a cellular network;
FIG. 5 is a schematic diagram of another frame structure in which a beam training method according to an aspect of this application is applied to a communications scenario of a cellular network;
FIG. 6 is a schematic diagram of another frame structure in which a beam training method according to an aspect of this application is applied to a communications scenario of a cellular network;
FIG. 7 is a schematic diagram of another frame structure in which a beam training method according to an aspect of this application is applied to a communications scenario of a cellular network;
FIG. 8 is a schematic diagram of a frame structure in which a beam training method according to an aspect of this application is applied to a communications scenario of a wireless local area network;
FIG. 9 is a schematic structural diagram of an initiator device according to an embodiment of this application; and
FIG. 10 is a schematic structural diagram of a responder device according to an embodiment of this application.

### DESCRIPTION OF EMBODIMENTS

The following describes the embodiments of the present invention as well as unclaimed embodiments and examples useful for understanding the invention with reference to accompanying drawings.

A beam training method according to the embodiments of this application is applied to a wireless communications system that supports a MIMO technology. The method is applied to a beam training process between an initiator and a responder, to perform beam training on a transmit beam of the responder and a receive beam of the initiator. Alternatively, beam training is performed on both a transmit beam of a receive side and a receive beam of a transmit side. The beam training means training on a transmit beam of the responder, or a receive beam of the initiator, or both a transmit beam of a receive side and a receive beam of a transmit side. An objective of training is to select one or more optimal beams from one or more to-be-selected beams, or generate one or more optimal beams based on the one or more to-be-selected beams. The optimal beam may be a beam having maximum signal strength, or a beam having minimum interference, or a beam having a maximum signal to interference plus noise ratio, or a beam meeting a criterion or an indicator required in another application.

The initiator may be a network device or a terminal device, and the responder may be a network device or a terminal device. Specifically, in some implementations, the initiator is a network device, and the responder is a terminal device. In some other implementations, both the initiator and the responder are terminal devices. In some other implementations, the initiator is a terminal device, and the responder is a network device. In some other implementations, both the initiator and the responder are network devices.

When the initiator is a network device and the responder is a terminal device, the beam training is uplink beam training. A beam obtained through the uplink beam training may be used to transmit uplink data. When an antenna beam of the initiator and an antenna beam of the responder have transmit and receive reciprocity (reciprocity), a beam obtained through the uplink beam training may also be used to transmit downlink data.

When both the initiator and the responder are terminal devices, it is assumed that the initiator and the responder have learned of an ID and information about a transmission capability, including a beam training capability in the present invention, of each other through the 3GPP, the IEEE 802 (for example, IEEE 802.11), or another communications protocol or technology. In consideration of security, the initiator and the responder have authenticated an identity of each other through the 3GPP, the IEEE 802, or another communications protocol or technology, to ensure that a propagation direction of a beam points to a destination transmitter or a destination receiver. A specific manner is not limited herein.

When the initiator is a network device and the responder is a plurality of network devices, including a mesh network topology, or a multi-hop relay network topology, or an ad hoc network topology, it is assumed that the initiator and the responder have learned of an ID and information about a transmission capability, including a beam training capability in the present invention, of each other through the 3GPP, the IEEE 802 (for example, IEEE 802.11), or another communications protocol or technology.

When the initiator is a terminal device and the responder is a plurality of network devices, it is assumed that the terminal device is separately associated with the plurality of network devices. For example, association may be implemented by using a multi-association technology or a multi-connection technology in a 3GPP protocol or an IEEE 802 protocol. Alternatively, assuming that the terminal device is associated with at least one of the plurality of network devices, the associated network device may notify another network device of an attribute and a status of the initiator. Alternatively, assuming that the terminal device is initially connected to the plurality of network devices, the terminal device is not associated with the network devices, but the terminal device learns of IDs and capabilities of the plurality of network devices through broadcast information such as a beacon frame or another system information of the network devices.

The network device in this application includes a base station (base station, BS), an access point (access point, AP), a network controller, a mobile switching center, or the like. The base station may include a macro base station, a micro base station, a relay station, an access point, a remote radio unit (remote radio unit, RRU), or the like in various forms. Another network side device having a wireless communication function may alternatively wirelessly communicate with user equipment. This is not uniquely limited in this application. In different systems, names of devices having a function of a base station may be different. For example, in a long term evolution (long term evolution, LTE) technology network, the device is referred to as an evolved NodeB (evolved NodeB, eNB or eNodeB), and in a 3rd generation (the 3rd generation, 3G) network, the device is referred to as a NodeB (Node B).

The terminal device is a device with a wireless sending and receiving function. The terminal device may be deployed on land, including an indoor or outdoor scenario, and a hand-held, wearable, or in-vehicle sin; or may be deployed on water (for example, on a steamship); or may be deployed in the air (for example, on an airplane, a balloon, or a satellite). The terminal device may be a mobile phone (mobile phone), a tablet computer (Pad), a computer having a wireless sending and receiving function, a virtual reality (virtual reality, VR) terminal device, an augmented reality (augmented reality, AR) terminal device, a wireless terminal related to industrial control (industrial control), a wireless terminal related to self driving (self driving), a wireless terminal related to remote medical (remote medical), a wireless terminal related to a smart grid (smart grid), a wireless terminal related to transportation safety (transportation safety), a wireless terminal related to a smart city (smart city), a wireless terminal related to a smart home (smart home), or the like. An application scenario is not limited in the embodiments of this application. The terminal device sometimes may also be referred to as user equipment (user equipment, UE), an access terminal device, a station (station, STA), a UE unit, a UE station, a mobile station, a mobile console, a remote station, a remote terminal device, a mobile device, a UE terminal device, a terminal device, a wireless communications device, a UE agent, a UE apparatus, or the like.

A beam (beam) may be understood as a spatial resource, and may be a transmit/receive precoding vector with an energy transmission direction or transmit/receive antenna weight vector with an energy transmission direction, and may be implemented through a digital domain, an analog domain, or a combination thereof. In addition, the transmit/receive precoding vector can be identified by using any one of, any two of, or all of index information, the precoding vector, and the antenna weight vector. The energy transmission direction may indicate that a signal on which precoding processing is performed by using the precoding vector, received in a spatial position, has relatively good receive power, for example, meets a receive demodulation signal-to-noise ratio. The energy transmission direction may also indicate that same signals transmitted from different spatial positions and received by using the precoding vector have different receive power.

Optionally, a same communications device (for example, a terminal device or a network device) may have different precoding vectors, and different devices may also have different precoding vectors, that is, correspond to different beams.

With respect to a configuration or a capability of a communications device, the communications device may use one or more of different precoding vectors at the same time, that is, one or more beams may be formed at the same time. Information about the beam may be identified by using index information. Optionally, the index information may correspond to a configured resource identity (identity, ID) of the UE. For example, the index information may correspond to a configured ID or resource of a channel state information-reference signal (channel state information reference signal, CSI-RS), or may correspond to a configured ID or resource of an uplink sounding reference signal (sounding reference signal, SRS), or may be a TRN resource, an LTE resource, or a channel estimation field (channel estimation field, CEF) symbol sequence resource. Alternatively, optionally, the index information may be a signal carried by using a beam or index information explicitly or implicitly carried on a channel. For example, the index information may be a synchronization signal sent by using a beam or index information of the beam indicated by using a broadcast channel.

A beam pair (beam pair) may include a transmit beam of a transmit end and a receive beam of a receive end, which may be referred to as an uplink beam and a downlink beam respectively. For example, the beam pair may include a gNB Tx beam transmission beam or a UE Rx beam receive beam, or a UE Tx beam transmission beam or a gNB Rx beam receive beam, where the transmission beam may also be understood as a transmit beam.

That the initiator is a network device and the responder is a terminal device is used as an example for description in the following. In other implementations, for example, a scenario in which both the initiator and the responder are terminal devices, a scenario in which the initiator is a terminal device and the responder is a network device, or a scenario in which both the initiator and the responder are network devices, reference may be made to the following embodiment. FIG. 1 is a simplified schematic diagram of an application scenario according to an embodiment of this application. The network device may be a base station, that is, the scenario shown in FIG. 1 is a wireless cellular scenario. Alternatively, the network device may be an access point, that is, the scenario shown in FIG. 1 is a wireless local area network scenario.

FIG. 2 shows a beam training method according to an embodiment of this application, and the method includes the following steps.

S201: An initiator sends beam training indication information to a responder.

The beam training indication information includes: identification information of one or more responders that participate in beam training, and either or both of information about resources allocated to the one or more responders, and information about training sequences allocated to the one or more responders.

Specifically, the identification information of the responder may be but is not limited to any one of the following: an identity (Identity, ID) of the responder, a range of an ID of the responder, an ID of a responder group (the responder group is a set including one or more responders), an ID of a beam (Beam) direction that covers the responder (when the responder has completed random access, the initiator may learn of a beam direction that covers the responder; and when the beam can be used to cover an area, a corresponding area covered by the beam may be referred to as a sector. Correspondingly, a "beam" may also be referred to as a "sector"), or an ID of a beam that covers the responder (when the responder has completed random access, the initiator may learn of the beam that covers the responder).

Optionally, the ID of the responder may be an association identifier (association ID, AID) or a media access control (media access control, MAC) address of the responder.

Optionally, the initiator may pre-agree with the responder on effective duration of the identification information of the responder.

The identifier of the responder is a wildcard character. To be specific, the initiator does not specify a responder that is to participate in uplink beam training, but instead the responder that receives the beam training indication information determines whether to participate in uplink beam training. If the responder determines to participate in uplink beam training, the responder performs uplink beam training by using a resource allocated by the initiator, so that the responder can perform uplink beam training more flexibly in a case of poor communication quality, without waiting for scheduling by the initiator.

The resource allocated to the responder includes a time domain resource and/or a frequency domain resource. The frequency domain resource includes a number of a channel or a sub-channel. The frequency domain resource may be divided by using frequency division multiplexing (frequency division multiplexing, FDM) or orthogonal frequency division multiple access (orthogonal frequency division multiple access, OFDMA) sub-channels. A specific manner of allocating the time domain resource is described subsequently with reference to a specific scenario.

The information about the training sequence may be a number of the training sequence. Like the prior art, the training sequences and numbers in a one-to-one correspondence with the training sequences may be prestored in the initiator and the responder, and the initiator selects a sequence from a group of training sequences, and notifies the responder of a number of the training sequence. In this way, a training sequence is allocated to the responder. The training sequence may be a CSI-RS (channel state information-reference signal) sequence, a CEF sequence, or a training sequence (training, TRN). The TRN (Training) sequence includes K TRN basic units. K is selected from a preset range. Optionally, the preset range may be a set {0, 1, ..., Kmax} or {1, 2, ..., Kmax}. Elements in the range set may be an arithmetic sequence with a common difference of 1, or the elements are not an arithmetic sequence with a common difference of 1, for example, 0, 1, 2, 4, 8. The initiator may specify a length of a training sequence for the responder. For example, the initiator selects a length from a set of a plurality of candidate lengths. The set of candidate lengths may be 32, 64, 128, 256, 512, or 1024. The initiator may allocate a same training sequence or different training sequences to different responders, or may allocate a plurality of training sequences to one responder. Allocation of the training sequence may be determined based on a sequence number of the identification information of the responder in the beam training indication information. To be specific, a responder indicated by an n^{th} piece of identification information uses a sequence n. For example, a responder indicated by an ID of the first responder uses a sequence 1, and a responder indicated by an ID of the second responder uses a sequence 2.

In some implementations, the initiator may explicitly indicate, in the beam training indication information, a channel number and/or a sequence number allocated to the responder that participates in uplink beam training.

Alternatively, in some other implementations, the initiator may not indicate a sequence number and/or a channel number, and each responder determines, based on a sequencing number of the identification information of the responder in the beam training indication information, a sequence number or a channel number allocated by the initiator to the responder. For example, a responder indicated by an ID of the first responder in the beam training indication information uses the first sequence. A responder indicated by an ID of the second responder uses the second sequence. The responder indicated by the ID of the first responder in the beam training indication information uses the first channel. The responder indicated by the ID of the second responder uses the second channel.

Optionally, because the initiator schedules uplink beam training of the responder, the initiator may allocate corresponding resources and/or training sequences to a plurality of responders, and the plurality of responders may perform uplink beam training in parallel.

For example, the initiator may distinguish between different responders in at least one of the following several manners:

Manner 1: The initiator distinguishes between different responders by using training sequences, namely, orthogonal training sequences allocated to different responders in the beam training indication information. For example, the beam training indication information includes the following: an ID of the first responder is an AID 1; a training sequence 1 of a length of 64 is allocated to a responder indicated by the AID 1 and is sent on an FDMA channel 1; an ID of a second responder is an AID 2; a training sequence 2 of a length of 64 is allocated to a responder indicated by the AID 2 and is sent on the FDMA channel 1; and the training sequence 1 is orthogonal to the training sequence 2.

Manner 2: The initiator distinguishes between different responders by using channels or sub-channels, namely, orthogonal channels or sub-channels allocated to different responders in the beam training indication information. For example, the beam training indication information includes the following: an ID of the first responder is an AID 1; a training sequence 1 of a length of 64 is allocated to a responder indicated by the AID 1 and is sent on an FDMA channel 1; an ID of a second responder is an AID 1; and a training sequence 1 of a length of 64 is allocated to a responder indicated by the AID 2 and is sent on the FDMA channel 2.

Manner 3: The initiator distinguishes between different responders by using different time domain resources.

Optionally, the beam training indication information may further include: indication information of a manner in which the responder sends an uplink training signal is used to indicate a manner in which the responder sends an uplink training signal on a resource allocated to the responder. A specific manner includes but is not limited to: orthogonal frequency division multiplexing (orthogonal frequency division multiplexing, OFDM).

Optionally, the beam training indication information may further include: indication information of a countdown (count down, CDOWN, where CDOWN decreases sequentially with frames that carry an uplink training signal of a sequence, and a CDOWN value in the last uplink training frame is 0) in the first frame that carries the uplink training signal and that is sent by the responder. Alternatively, the beam training indication information further includes indication information of a quantity of frames that carry the uplink training signal and that are sent by the responder, and the responder sets, based on the quantity, a countdown value CDOWN carried in the first uplink training frame.

Optionally, the beam training indication information may further include: signal polarization indication, where signal polarization includes one or more of horizontal polarization, vertical polarization, dual (cross) polarization, and circular polarization. Optionally, one antenna (identified by an antenna ID) may correspond to one type of signal polarization information. The responder may perform uplink beam training based on the signal polarization indication. For example, when the beam training indication information sent by the initiator includes a signal polarization indication of circular polarization, the responder transmits a signal in a circular polarization manner, to perform uplink beam training.

S202: The responder receives the beam training indication information, and sends the uplink training signal based on the beam training indication information.

Specifically, when determining that the beam training indication information includes the identification information of the responder, the responder sends the uplink training signal by using the allocated training sequence and allocated resource.

Optionally, the responder sends the uplink training signal in a sending manner indicated by the beam training indication information. If a manner indicated by the beam training indication information is OFDM, the responder adds a cyclic prefix (cyclic prefix, CP) to an OFDM symbol, to align uplink symbols of a plurality of responders. If a manner indicated by the beam training indication information is discrete Fourier transform-orthogonal frequency division multiplexing (discrete Fourier transfer-orthogonal frequency division multiplexing, DFT-OFDM), the responder adds a CP to a DFT-OFDM symbol, to align uplink symbols of a plurality of responders.

Certainly, if the beam training indication information does not indicate a manner in which the responder sends a signal, the responder may determine to use the OFDM manner or the DFT-OFDM manner, and add a CP to an OFDM symbol or a DFT-OFDM symbol. The responder may also determine to use another sending manner.

Optionally, before performing beam training, that is, sending an uplink training signal, the responder may listen on a channel covered by a beam and/or a beam direction indicated by the initiator. If the channel is busy, the responder cancels sending the uplink training signal on the beam and/or in the beam direction. A channel listening time may start from a time of receiving the beam training indication information, and lasts for predetermined duration. The predetermined duration may be agreed upon by the initiator and the responder in advance, or the initiator may send the predetermined duration to the responder.

Optionally, any responder may further send an identifier of the responder in addition to the uplink training signal. When the responder sends only the uplink training signal without sending the identification information of the responder, the initiator may distinguish between different responders by using training sequences and/or resources.

Optionally, the responder may further send information about a beam. The information about the beam includes: one or more of a number of an antenna, a number of a radio frequency (radio frequency, RF) chain, or a number of a beam that is used for sending the uplink training signal by the responder.

Optionally, the responder may further send one or more numbers and corresponding quality parameters, received by the responder, of a frame that carries a beam training indication signal. Specifically, CDOWN in the frame that carries the beam training indication signal may be used as a number of the frame. The quality parameter may be a received signal strength indicator (received signal strength indication, RSSI), a signal-to-noise ratio (signal-to-noise ratio, SNR), or a signal to interference plus noise ratio (signal to interference plus noise ratio, SINR).

Optionally, the responder may further send information about an optimal beam that is selected by the responder and that is used by the initiator to send downlink data. Specifically, the information about the optimal beam may be a number of the beam, a number of the optimal beam, or CDOWN. In other words, the responder may select, based on a received signal (the signal may be a signal that is sent by the initiator by using a plurality of antennas and that carries the beam training indication information) sent by the initiator, an optimal beam used by the initiator to send the downlink data, and send a selected optimal beam to the initiator.

Optionally, the responder may send a frame, where the frame includes an uplink training signal, and in addition to the uplink training signal, the frame may further include at least one of an identifier of the responder, information about a beam, one or more numbers and corresponding quality parameters, received by the responder, of a frame that carries the beam training indication signal, or information about the optimal beam that is selected by the responder and that is used by the initiator to send downlink data.

If the identifier of the responder included in the beam training indication information is a wildcard character, the responder determines whether to perform beam training based on the resource and training sequence allocated in the beam training indication information. If the responder determines to perform beam training, the responder sends a temporary identifier, where the temporary identifier may be generated based on a MAC address of the responder, or generated randomly, or generated by using both a MAC address and a random value. Specifically, the identifier of the responder in the foregoing frame is replaced with a temporary identifier.

Optionally, the responder may further send CDOWN, and the CDOWN is used to indicate a sequence number in reverse order of a current frame that carries the uplink training signal. The CDOWN may be determined based on the indication information, indicated by the beam training indication information, of a countdown value CDOWN in the first frame that carries the uplink training signal and that is sent by the responder, or based on the indication information of the quantity of frames that carry the uplink training signal and that are sent by the responder.

S203: The initiator receives the uplink training signal sent by the responder, and sends training feedback information to one or more responders.

Specifically, the initiator receives the uplink training signal by using an antenna array, and determines an optimal beam, that is, determines the selected beam.

The training feedback information includes information about beams selected for the one or more responders, and the information about the beam includes one or more of a number of an antenna, a number of an RF chain, or a number of a beam that is selected by the initiator and that is used by the responder for uplink transmission. Specifically, the training feedback information may include identifiers of one or more responders and information about beams corresponding to the identifiers of the one or more responders.

Optionally, the training feedback information may further include SNRs of beams selected for the one or more responders. Therefore, the responder may select, based on the received SNR, a beam or beam direction used for sending. In this embodiment, the beam or the beam direction is used to indicate a direction of sending a signal. Alternatively, the responder may set, based on the SNR, a modulation and coding scheme or transmit power for transmitting a signal in a corresponding beam direction, or the SNR may be used for settings of other parameters and decision.

In some implementations, the initiator may select one or more beams for one responder. When the training feedback information includes information about a plurality of beams selected for one responder, the training feedback information further includes channel state feedback information of the plurality of beams, so that the responder selects one or more beam directions from the plurality of beam directions to send a signal. For example, when the responder detects that a channel in a beam direction is busy, the responder may send a signal in another beam direction. Alternatively, the responder sends a plurality of data streams in a plurality of beam directions. Certainly, the channel state feedback information of the plurality of beams may also be used for another purpose.

Optionally, if a frame sent by the responder in the S202 includes a temporary identifier, the initiator uses one or more of the temporary identifier, a number of an optimal beam that is fed back and selected by the responder, or a scrambling code field (scrambling code Field) in the frame that is sent by the responder and that carries the uplink training signal, in the training feedback information as an identifier of the responder using the temporary identifier, so that the responder receives the training feedback information. A function of the scrambling code field is to improve security of the training feedback information sent to the responder when the responder determines to participate in uplink beam training and uses a temporary identifier. Further, the scrambling code field may also be used to scramble a header and a payload of the frame that carries the training feedback information. The scrambling is implemented by an exclusive OR operation on a data bit sequence. The scrambling code field is located before a packet header and a data field, to further improve security.

In another implementation, the identifier of the responder and the information about a beam selected by the initiator for the responder may not be sent simultaneously. The initiator may first send received identifiers of the one or more responders without sending the information about the beams selected for the one or more responders, to notify the responder that the uplink training signal has been received. In a subsequent announcement transmission interval (announcement transmission interval, ATI) or a contention based access period (contention based access period, CBAP) or a service period (service period, SP), the initiator then sends the information about the beams selected for the one or more responders. In other words, the identifier of the responder and the information about the beam selected by the responder are sent at different times.

Optionally, the training feedback information may further include a quantity of identifiers of the responders, so that the responders correctly demodulate the identifiers of the responders.

After receiving the information about the beam selected by the initiator, the responder sends the uplink data on the selected beam. Alternatively, if the responder finds a beam that is better than the beam selected by the initiator, the responder may determine to send the uplink data on the better beam.

It can be learned from the process shown in FIG. 2 that, the initiator sends the beam training indication information to the responder to schedule uplink beam training of the responder. In other words, the responder sends an uplink training signal to the initiator based on the beam training indication information, to perform uplink beam training. The initiator selects an optimal beam for uplink transmission for the responder based on the uplink training signal. Compared with an existing manner in which the responder determines by itself to perform uplink beam training, a manner in which the initiator schedules uplink beam training can not only improve efficiency of uplink beam training efficiency, but also can implement uplink beam training in parallel of different responders by allocating different training resources to the different responders.

The process shown in FIG. 2 may be applied to a communications scenario of a cellular network or a wireless local area network. A difference between different communications scenarios to which the process in FIG. 2 is applied lies in a structure of a frame that carries the beam training indication information, the uplink training signal, and the training feedback information, and a specific manner of sending the frame.

The following describes in detail the process shown in FIG. 2 with reference to communications scenarios of a cellular network and a wireless local area network. It should be noted that beam training indication information, an uplink training signal, and training feedback information that are included in a frame structure shown in the following specific scenarios are merely examples, all content included in the beam training indication information, the uplink training signal, and the training feedback information in the embodiment shown in FIG. 2 may not be included. In addition, the following embodiment focuses on describing a specific implementation of the embodiment shown in FIG. 2 in a specific scenario, and features of the embodiment shown in FIG. 2 that are commonly applicable to a plurality of scenarios are not described again.

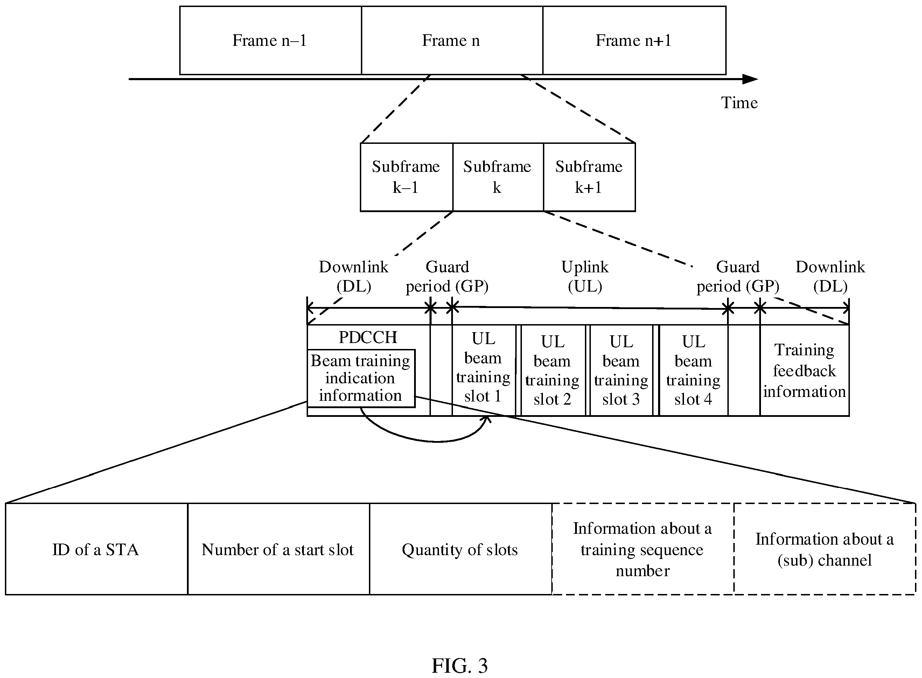

FIG. 3 is a schematic diagram of a frame structure of interaction in a process shown in FIG. 2 between a base station used as an initiator and a STA used as a responder in a communications scenario of a cellular network.

Specifically, the base station sends a frame (frame) to the STA. Frame n-1, frame n, and frame n+1 are used as examples for description, where n is an integer greater than 0. In this implementation, the frame n is a frame used for sending beam training indication information, and the frame n-1 and the frame n+1 may be frames used for sending data. Alternatively, in another implementation, the frame n-1 and the frame n+1 may be frames used for sending the beam training indication information.

The following uses the frame n as an example for description. A subframe (subframe) k in the frame n includes the beam training indication information, where k is an integer greater than 0. In this implementation, the subframe k is located in the middle of the frame n. However, a position of the subframe k is not limited. In another implementation, the subframe k may be located anywhere in the frame n, for example, a frame header or a frame trailer. The beam training indication information may be sent by using a physical downlink control channel (physical downlink control channel, PDCCH).

The beam training indication information shown in FIG. 3 includes an ID of the STA, a time domain resource (a number of a used start slot and an indication of a quantity of used slots) allocated to the STA, a number of a training sequence, and information about a sub-channel.

In a cellular communications scenario, in the beam training indication information, information about a slot or a quantity of training symbols (which is not shown in FIG. 3) may be used to indicate a time domain resource allocated to the STA. In FIG. 3, a slot, specifically, a number of a start slot and a quantity of slots are used to indicate the time domain resource allocated by the base station to the STA.

A STA specified in the downlink control information uses a training sequence allocated in the downlink control information to the STA, and sends, in the subframe k, an uplink (uplink, UL) training signal by using a slot (denoted as a UL beam training slot in FIG. 3) allocated in the downlink control information to the STA.

After receiving the uplink training signal, the base station sends training feedback information to the STA in the subframe k.

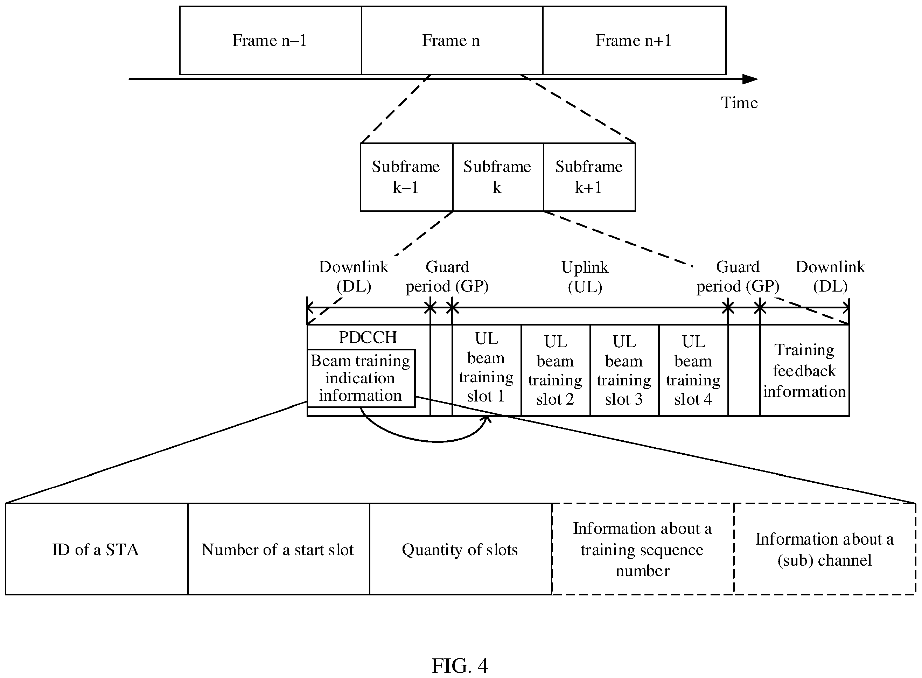

A transition time is required for beam switching. Therefore, in FIG. 3, there is spacing between different UL beam training slots, and a length of the spacing may be predetermined. Alternatively, spacing between different UL beam training slots in the UL may be padded with signals, so that slots of two adjacent beams are continuous, as shown in FIG. 4.

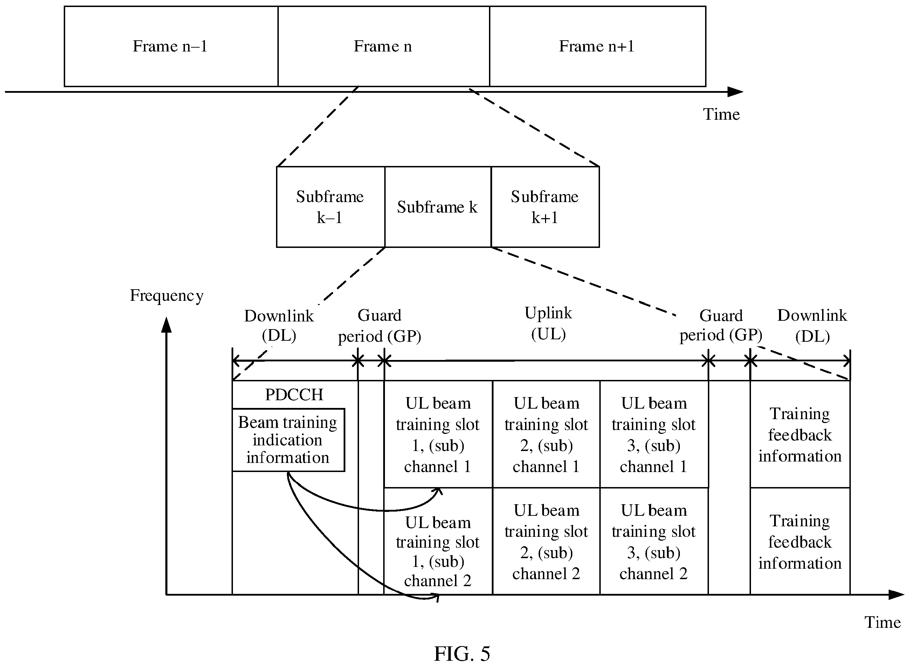

FIG. 3 and FIG. 4 are described by using an example that a time domain resource in the downlink control information is allocated to the STA. A difference between FIG. 5 and FIG. 3 and FIG. 4 lies in that a time domain resource and a frequency domain resource (a sub-channel) in the beam training indication information are allocated to the STA, and the STA sends, in a k^{th} subframe, an uplink training signal by using a slot and a sub-channel that are allocated to the STA in the beam training indication information.

In FIG. 3 to FIG. 5, the base station sends the beam training indication information and the training feedback information in a same subframe. Optionally, the base station may further separately send the beam training indication information and the training feedback information in different subframes.

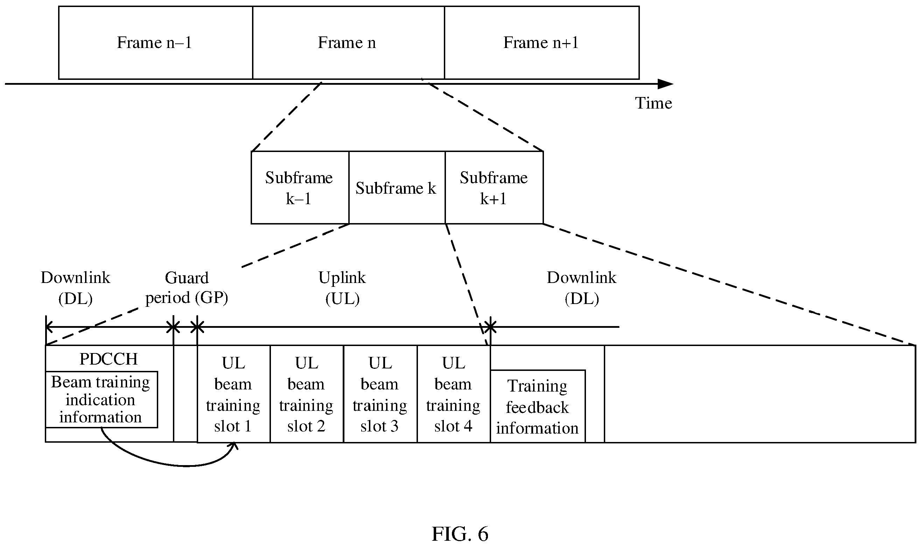

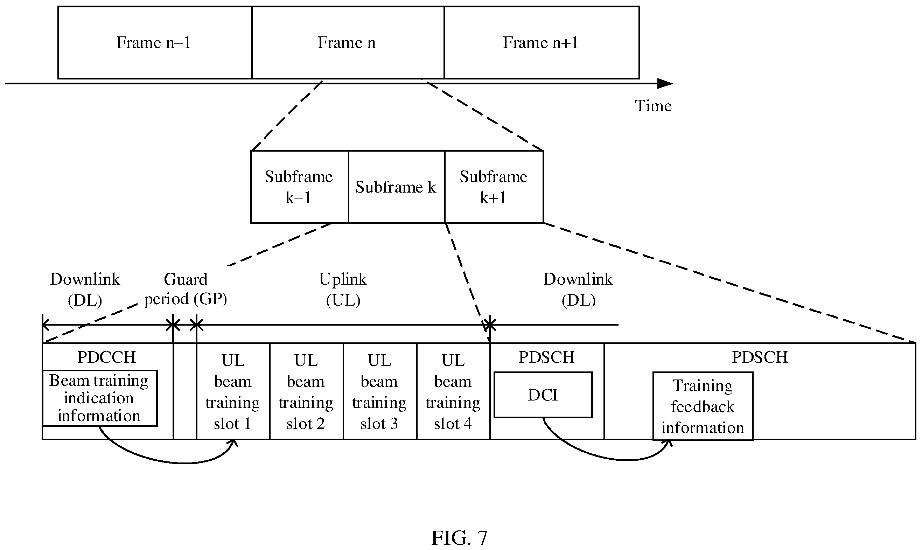

In FIG. 6, the initiator sends the training feedback information in a (k+1)^{th} subframe. Further, as shown in FIG. 7, downlink control information (downlink control information, DCI) indication information and physical downlink shared channel (physical downlink shared channel, PDSCH) information are sent in the (k+1)^{th} subframe, where the PDSCH information includes the training feedback information, and the DCI is used to indicate a resource occupied by the training feedback information on the PDSCH.

Optionally, the base station may set frame configuration (frame configuration) information in a current subframe or a previous subframe, to indicate that a structure of the current subframe is downlink-spacing-uplink-downlink shown in FIG. 3, or downlink-spacing-uplink shown in FIG. 6 or FIG. 7.

Optionally, the base station may instruct the STA to send the uplink training signal in a plurality of subframes. To be specific, the beam training indication information may further include an instruction carried in one or more subframes for the uplink training signal. The plurality of subframes may be continuous or not. If a plurality of subframes are discontinuous, the subframes may be periodic.

Optionally, the base station may further indicate channel listening. To be specific, the beam training indication information may further include channel listening indication information, to instruct the STA to perform channel listening on a specified resource. For example, the base station sends the channel listening indication information in a subframe 1, to indicate a beam and/or beam direction that requires listening and a time interval of channel listening, and sends the beam training indication information in a subframe 2.

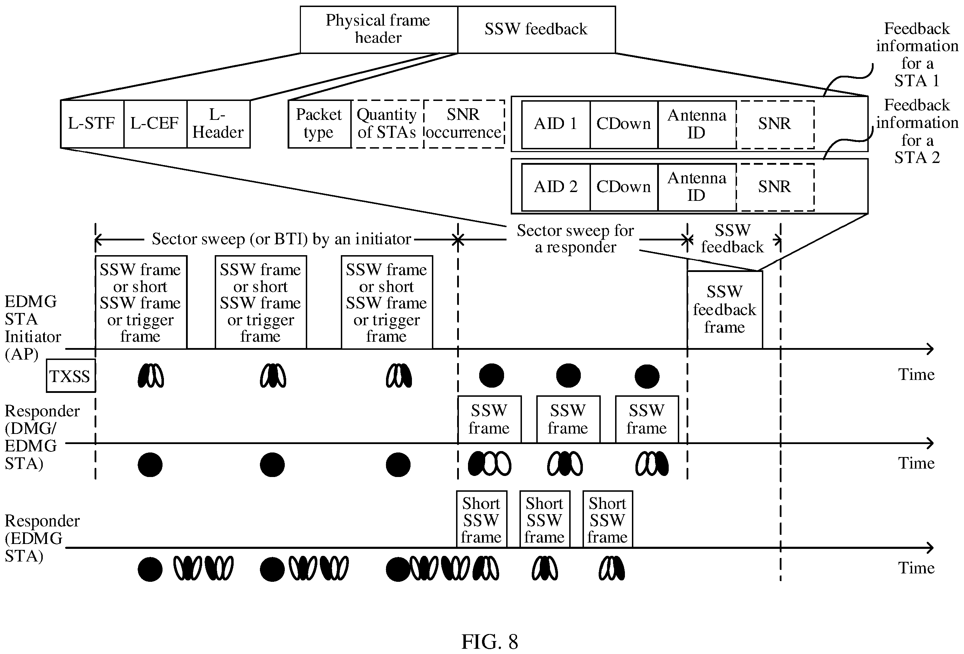

FIG. 8 is a schematic diagram of a frame structure of interaction in a process shown in FIG. 2 between an AP used as an initiator and a STA used as a responder in a communications scenario of a wireless local area network.

In FIG. 8, the AP sends a trigger frame to the STA, where the trigger frame includes beam training indication information. Specifically, a specific method for indicating, by using the trigger frame, a time domain resource allocated to the STA is:

1. The trigger frame includes a quantity of frames used by the AP to perform beam scanning (in a communications scenario of a wireless local area network, beam scanning is also referred to as sector sweeping (sector sweeping, SSW), and a beam scanning frame is referred to as an SSW frame), where the quantity is N.

A quantity of SSW frames is used to indicate time domain resources allocated by the AP to the STA. Alternatively, duration of an SSW frame may be used to indicate the time domain resource allocated by the AP to the STA.

2. The trigger frame includes a countdown value CDOWN, used to indicate a sequence number in reverse order of a current trigger frame, to indicate the time domain resource allocated by the AP to the STA.

3. The trigger frame includes a slot that is used to indicate the time domain resource allocated by the AP to the STA.

4. The trigger frame includes a quantity of SSW frames and CDOWN, namely, a combination of foregoing method 1 and 2, to indicate the time domain resource allocated by the AP to the STA, where the quantity is N.

Optionally, the SSW frame may be an SSW frame in a DMG format, an SSW frame in an EDMG format, a short SSW frame in an EDMG format, or an SSW frame in another format. A format of the SSW frame may be agreed on in advance.

Optionally, the trigger frame may further include indication information of an uplink SSW frame, used to indicate formats and/or a quantity of SSW frames used by the STA to send the uplink training signal. Specifically, the SSW frame may be in the DMG (Directional Multi-Gigabit, IEEE 802.11ad) format, the EDMG (Enhanced Directional Multi-Gigabit, IEEE 802.11ay) format, or may be a short SSW frame in the EDMG format. As a result, frames are aligned in beam scanning by the AP, thereby reducing complexity of reception and detection by the AP. The quantity is less than or equal to N.

In FIG. 8, the AP sequentially sends a plurality of trigger frames, and spacing between two adjacent trigger frames is preset and may be short inter-frame spacing (short inter-frame spacing, SIFS), short beamforming inter-frame spacing (short beamforming inter-frame spacing, SBIFS), medium beamforming inter-frame spacing, MBIFS (medium beamforming inter-frame spacing, MBIFS), or large beamforming inter-frame spacing (large beamforming inter-frame spacing, LBIFS). Each of the plurality of trigger frames points to one or more of a plurality of STAs.

Optionally, the AP may send a single trigger frame, and send the beam training indication information to one or more STAs. The AP may further simultaneously send the beam training indication information to a plurality of STAs by using a downlink multi-user frame. The downlink multi-user frame includes a compatible DMG preamble and includes a channel estimation field (channel estimation field, CEF) part, and the CEF part is transmitted in parallel by using a plurality of sequences. Messages that are of a plurality of users and that are in the multi-user frame sent by the AP are sent in an antenna configuration manner, a beam direction manner, or an antenna weight vector manner that is the same as the plurality of sequences.

After the STA receives the trigger frame, if an ID of the STA included in the trigger frame matches an ID of the STA or a Group ID matches a Group ID of the STA, the STA replies with an SSW frame on a resource indicated by the trigger frame, where the SSW frame includes an uplink training signal.

Optionally, if the trigger frame includes CDOWN, the STA returns an SSW frame in a trigger frame in which CDOWN = 0.

Optionally, the SSW frame may further include an ID of the AP or an ID of a basic service set (basic service set, BSS) in addition to the uplink training signal. The SSW frame may further include CDOWN, indicating a sequence number in reverse order of the SSW frame.

If the trigger frame indicates that a quantity of SSW frames to be used by the STA to send the uplink training signal is N, the STA needs to send N SSW frames.

If the trigger frame indicates that a quantity of SSW frames to be used by the STA to send the uplink training signal is not greater than N, the STA sends less than N SSW frames. Further, the STA may send an SSW frame in an optimal direction determined by the STA, and when a quantity of optimal directions is less than N, the STA may send less than N SSW frames.

If the trigger frame indicates a format of the SSW frame, the STA uses an SSW frame in a format indicated by the trigger frame.

Specifically, the STA may feed back, in the SSW frame, CDOWN and corresponding RSSIs or SNRs or SINRs of one or more trigger frames received by the STA.

The AP sends an SSW feedback frame, where the SSW feedback frame includes training feedback information. Specifically, the SSW feedback frame includes an ID of a STA of one or more SSW frames received by the AP, and CDOWN or a slot number corresponding to each received SSW frame, where the CDOWN or the slot number is used to indicate a number of a beam.

Optionally, when the SSW feedback frame does not include SNRs of beams selected for one or more STAs, the STA may communicate with the AP using an MCS (modulation and coding scheme) with a lowest rate of a control PHY or an SC mode. The SSW feedback frame may include an indication of whether an SNR is included.

In a case of a limited frame transmission time, for example, in the case that a DMG SSW feedback transmission time needs be met in A-BFT, the AP may send the SSW feedback frame by using a physical layer PHY frame, where a PHY header of the frame indicates that the frame does not have a MAC header and a frame type is an SSW feedback frame. Specifically, the PHY frame includes an identifier (for example, an association identifier AID) and a beam identifier (for example, CDOWN, or a sector ID, or/and an antenna (antenna) ID) of one or more STAs, and optionally, may further include an SNR corresponding to the beam identifier.

That the STA sends an SSW frame is used as example in FIG. 8. In addition to the SSW frame, the STA may further send an uplink training signal by using a beam refinement protocol (beam refinement protocol, BRP) frame. Specifically, the BRP frame includes the uplink training signal and a TRN unit. The TRN unit is a reference signal used for beam training. Each TRN unit may cover a plurality of directions.

Specifically, each TRN unit includes P TRN basic units and M TRN basic units. A sending direction of the P TRN basic units is the same as a transmission direction (determined by the antenna weight vector) of a physical frame preamble and data. Every N TRN basic units of the M TRN basic units are sent in a same transmission direction. The TRN basic unit includes one or more Golay sequences. The TRN basic unit may include a plurality of sequences for parallel sending. A receiver (namely, an AP) of the BRP frame may use P TRN basic units for synchronization. Signal strength measurement or channel measurement in each transmission direction is performed by using every N TRN basic units.

The AP may add BRP request information to the beam training indication information, namely, the trigger frame, to instruct the STA to perform BRP training. The BRP request information includes one bit, and 1 and 0, or 0 and 1 respectively indicates that a type of sending an uplink training signal by the STA is a parallel scan feedback or a cross scan feedback. If the type is a parallel scan feedback, one piece of channel measurement feedback information is fed back to beams/beam directions selected by N transmit antennas and beam/beam directions of receive antennas corresponding to the beams of the transmit antennas. One piece of channel measurement feedback information includes one-tap (tap) delay and amplitude (which may be represented by an amplitude value, or a real-part value and an imaginary-part value, or an in-phase value and a quadrature-phase value) information of each path. The BRP request information may further include N corresponding pieces of SNR information. If the type is a cross scan feedback, a total of N x M pieces of channel measurement feedback information between the N transmit antennas and M receive antennas is fed back. The BRP request information may further include N x M corresponding pieces of SNR information.

Optionally, the BRP request information further includes at least one of a P parameter, an N parameter, and an M parameter, and is used to instruct the STA to send the TRN unit by using the P parameter, the N parameter, and the M parameter.

Optionally, the BRP request information may further include a quantity of BRP frames and/or a modulation and coding scheme.

Optionally, the STA may use the BRP frame, or the SSW frame, or another frame to carry a CDOWN field, and identify a beam by using the CDOWN field and a quantity of TRN units. Optionally, the STA may use the BRP frame, or the SSW frame, or another frame to carry a beam ID field and an antenna ID field, and indicate a beam by using the beam ID field, the antenna ID field, and the quantity of TRN units.

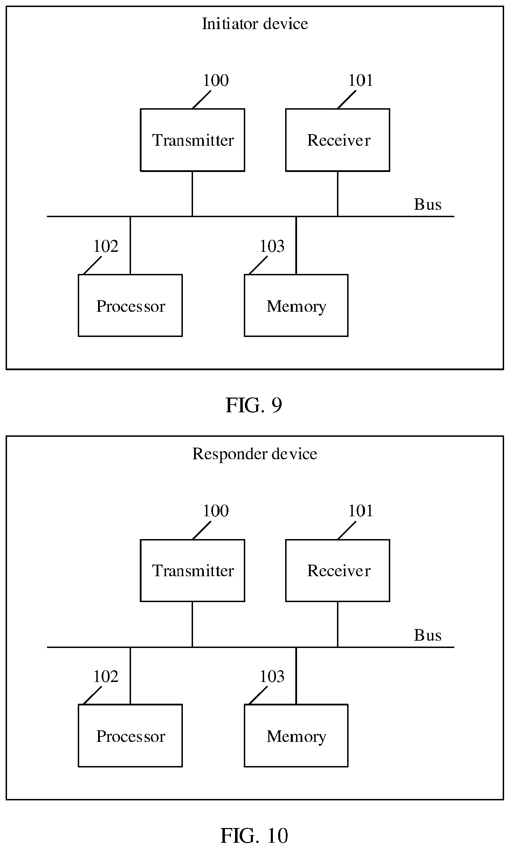

FIG. 9 is a possible schematic structural diagram of an initiator device according to an embodiment of this application. In different embodiments, the initiator device may be a network device. Specifically, the network device may be a base station, and the base station may implement the process shown in FIG. 2 by using a frame structure shown in FIG. 3 to FIG. 6. Alternatively, the network device may be an AP, and the AP may use the frame structure shown in FIG. 7 or FIG. 8, to implement the process shown in FIG. 2. The initiator device may alternatively be a terminal device.

In an example, a structure of the initiator device includes: a transmitter 100 and a receiver 101. The transmitter 100 is configured to send beam training indication information. The beam training indication information includes: identification information of one or more responders that participate in beam training, and either of both of information about resources allocated to the one or more responders and information about training sequences allocated to the one or more responders. The receiver 101 is configured to receive uplink training signals sent based on the beam training indication information by the one or more responders that participate in beam training. The transmitter 100 is further configured to send training feedback information, where the training feedback information includes information about beams selected for the one or more responders.

Specifically, for a specific manner of implementing the foregoing functions by the transmitter 100 and the receiver 101, refer to the process shown in FIG. 2. Details are not described herein again.

The initiator device may further include a processor 102 and a memory 103. The processor 102 is configured to generate beam training indication information and training feedback information. The memory 103 is configured to store an application program configured to implement the function of the initiator shown in FIG. 2, and data generated in a running process of the application program. The transmitter 100, the receiver 101, the processor 102, and the memory 103 may be connected by using a bus.

It can be understood that FIG. 9 shows only a simplified design of the initiator device. In different implementations, the initiator device may include any quantity of transmitters, receivers, processors, memories, and the like, and all initiator devices that can implement this application fall within the protection scope of this application.

The initiator device has a function of scheduling a responder to perform uplink beam training, to enable a plurality of responders to perform uplink beam training in parallel, thereby improving efficiency of uplink beam training.

FIG. 10 is a possible schematic structural diagram of a responder device according to an embodiment of this application. In different embodiments, the responder device may be a terminal device. Specifically, the terminal device may implement the process shown in FIG. 2 in a cellular network by using a frame structure shown in FIG. 3 to FIG. 6. Alternatively, the terminal device may implement the process shown in FIG. 2 in a wireless local area network by using a frame structure shown in FIG. 7 or FIG. 8.

In an example, the responder device includes a transmitter 100 and a receiver 101. The receiver 101 is configured to receive beam training indication information sent by an initiator. The beam training indication information includes: identification information of a first responder that participates in beam training, and either of both of information about a resource allocated to the first responder and information about a training sequence allocated to the first responder. The transmitter 100 is configured to send an uplink training signal to the initiator based on the beam training indication information. The receiver 101 is further configured to receive training feedback information sent by the initiator, where the training feedback information includes information about a beam selected for the first responder.

Specifically, for a specific manner of implementing the foregoing functions by the transmitter 100 and the receiver 101 and another function of the transmitter 100, refer to the process shown in FIG. 2. Details are not described herein again. The responder device may further include a processor 102 and a memory 103, and the processor 102 is configured to generate an uplink training signal. The memory 103 is configured to store an application program configured to implement the function of the responder shown in FIG. 2, and data generated in a running process of the application program. The transmitter 100, the receiver 101, the processor 102, and the memory 103 may be connected by using a bus.

It can be understood that FIG. 10 shows only a simplified design of the responder device. In different implementations, the responder device may include any quantity of transmitters, receivers, processors, memories, and the like, and all responder devices that can implement this application fall within the protection scope of this application.

The responder device performs uplink beam training under scheduling of the initiator device, helping improve efficiency of uplink beam training.

Each embodiment in this specification focuses on differences from other embodiments, and for a same or similar part between embodiments, reference may be made to each other.

All or some of the foregoing embodiments may be implemented by using software, hardware, firmware, or any combination thereof. When software is used to implement the embodiments, all or some of the foregoing embodiments may be implemented in a form of a computer program product. The computer program product includes one or more computer instructions. When the computer program instructions are loaded and executed on a computer, the procedure or functions according to the embodiments of the present invention are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk solid state disk (SSD)), or the like.

The objectives, technical solutions, and benefits of this application are further described in detail in the foregoing specific embodiments. It should be understood that the foregoing descriptions are merely specific embodiments of this application, but are not intended to limit the protection scope of this application. The scope of the invention is defined by the appended claims.

## Claims

1. A beam training method, comprising:
sending (S201), by an initiator, beam training indication information, wherein the beam training indication information comprises: identification information of one or more responders that participate in beam training, and either or both of information about resources allocated to the one or more responders and information about training sequences allocated to the one or more responders, wherein the identification information is a wildcard character, wherein the wildcard character denotes that the initiator does not specify a responder that is to participate in uplink beam training;
receiving (S202), by the initiator, uplink training signals sent based on the beam training indication information by the one or more responders that participate in beam training, wherein the receiving, by the initiator, uplink training signals sent based on the beam training indication information by the one or more responders that participate in beam training comprises: receiving, by the initiator, a temporary identifier of a responder, out of the one or more responders, that determines to perform beam training based on the beam training indication information; and
sending (S203), by the initiator, training feedback information, wherein the training feedback information comprises information about beams selected for the one or more responders, wherein the beams selected for the one or more responders are beams selected by the initiator and used by the one or more responders.

2. The method according to claim 1, wherein the beam training indication information further comprises:
indication information of a countdown value CDOWN in the first frame that carries the uplink training signal and that is sent by the responder; or indication information of a quantity of frames that carry the uplink training signal and that are sent by the responder.

3. The method according to claim 1, wherein the training feedback information further comprises one or more of the following:
signal-to-noise ratios of the beams selected for the one or more responders, information about a plurality of beams selected for one responder, channel state feedback information of the plurality of beams, or a quantity of identifiers of the responders.

4. The method according to claim 1, wherein when the initiator receives the temporary identifier of the responder, one or more of the following in the training feedback information are used as an identifier of the responder using the temporary identifier:
the temporary identifier, a number of an optimal beam that is fed back by the responder and that is selected by the responder, and a scrambling code field in the frame that carries the uplink training signal and that is sent by the responder.

5. The method according to any one of claims 1 to 4, wherein the information about a beam out of the beams selected by the initiator and used by the one or more responders comprises:
one or more of a number of an antenna, a number of a radio frequency chain, or a number of a beam that is used for sending the uplink training signal.

6. The method according to any one of claims 1 to 4, wherein resources and/or training sequences allocated to different responders in the one or more responders are different.

7. A beam training method, comprising:
receiving (S201), by a first responder, beam training indication information sent by an initiator, wherein the beam training indication information comprises: identification information of one or more responders that participate in beam training, and either or both of information about resources allocated to the one or more responders and information about training sequences allocated to the one or more responders, wherein the identification information is a wildcard character, wherein the wildcard character denotes that the initiator does not specify a responder that is to participate in uplink beam training;
sending (S202), by the first responder, an uplink training signal to the initiator based on the beam training indication information, wherein the sending, by the first responder, an uplink training signal to the initiator based on the beam training indication information comprises: sending, by the first responder, a temporary identifier to the initiator if the first responder determines to perform beam training based on the beam training indication information; and
receiving (S203), by the first responder, training feedback information sent by the initiator, wherein the training feedback information comprises information about a beam selected for the first responder, wherein the beam selected for the first responder is a beam selected by the initiator and used by the first responder.

8. The method according to claim 7, wherein the temporary identifier is generated based on a media access control MAC address of the first responder, or generated randomly, or generated based on the MAC address and a random value of the first responder.

9. The method according to claim 7, wherein before the receiving, by the first responder, training feedback information, the method further comprises:
sending, by the first responder, CDOWN to the initiator, wherein the CDOWN is used to indicate a sequence number in reverse order of a current frame that carries the uplink training signal, wherein
the CDOWN is determined based on indication information, indicated by the beam training indication information, of CDOWN in the first frame that carries the uplink training signal and that is sent by the first responder, or based on indication information of a quantity of frames that carry the uplink training signal and that are sent by the first responder.

10. The method according to claim 7, wherein before the receiving, by the first responder, training feedback information, the method further comprises:
sending, by the first responder to the initiator, one or more numbers and corresponding quality parameters, received by the first responder, of a frame that carries the beam training indication information, wherein CDOWN in the frame that carries the beam training indication signal is used as a number of the frame, and the quality parameters comprise received signal strength indicators, RSSI, signal-to-noise ratios SNR, or signal to interference plus noise ratios, SINR.

11. The method according to claim 7, wherein before the receiving, by the first responder, training feedback information, the method further comprises:
sending, by the first responder to the initiator, information about an optimal beam that is selected by the first responder and that is used for the initiator to send downlink data.

12. An initiator device, comprising:
a transmitter (100), configured to send beam training indication information, wherein the beam training indication information comprises: identification information of one or more responders that participate in beam training, and either or both of information about resources allocated to the one or more responders and information about training sequences allocated to the one or more responders, wherein the identification information is a wildcard character, wherein the wildcard character denotes that the inditiator does not specify a responder that is to participate in uplink beam training; and
a receiver (101), configured to receive uplink training signals sent based on the beam training indication information by the one or more responders that participate in beam training, wherein the receiver (101) is further configured to receive a temporary identifier of a responder, out of the one or more responders, that determines to perform beam training based on the beam training indication information, and
wherein
the transmitter (100) is further configured to send training feedback information, wherein the training feedback information comprises information about beams selected for the one or more responders, wherein the beams selected for the one or more responders are beams selected by the initiator and used by the one or more responders.

13. A responder device, comprising:
a receiver (101), configured to receive beam training indication information sent by an initiator, wherein the beam training indication information comprises: identification information of one or more responders that participate in beam training, and either or both of information about resources allocated to the one or more responders and information about training sequences allocated to the one or more responders, wherein the identification information is a wildcard character, wherein the wildcard character denotes that the initiator does not specify a responder that is to participate in uplink beam training; and
a transmitter (100), configured to send an uplink training signal to the initiator based on the beam training indication information, wherein the transmitter (100) is further configured to send a temporary identifier to the initiator if the first responder determines to perform beam training based on the beam training indication information wherein
the receiver (101) is further configured to receive training feedback information sent by the initiator, wherein the training feedback information comprises information about a beam selected for the first responder, wherein the beam selected for the first responder is a beam selected by the initiator and used by the first responder.

## Patentansprüche

1. Strahltrainingsverfahren, umfassend:
Senden (S201) von Strahltrainingsanzeigeinformationen durch einen Initiator, wobei die Strahltrainingsanzeigeinformationen umfassen: Identifikationsinformationen eines oder mehrerer Antwortsender, die am Strahltraining teilnehmen, und eine oder beide von Informationen über Ressourcen, die dem einen oder den mehreren Antwortsendern zugewiesen sind, und Informationen über Trainingssequenzen, die dem einen oder den mehreren Antwortsendern zugewiesen sind, wobei es sich bei den Identifikationsinformationen um ein Platzhalterzeichen handelt, wobei das Platzhalterzeichen angibt, dass der Initiator keinen Antwortsender spezifiziert, der an einem Uplink-Strahltraining teilnehmen soll;
Empfangen (S202) von Uplink-Trainingssignalen durch den Initiator, die basierend auf den Strahltrainingsanzeigeinformationen durch den einen oder die mehreren Antwortsender gesendet werden, die am Strahltraining teilnehmen, wobei das Empfangen von Uplink-Trainingssignalen durch den Initiator, die basierend auf den Strahltrainingsanzeigeinformationen durch den einen oder die mehreren Antwortsender gesendet werden, die am Strahltraining teilnehmen, umfasst: Empfangen durch den Initiator einer temporären Kennung eines Antwortsenders unter dem einen oder den mehreren Antwortsendern, der bestimmt, Strahltraining basierend auf den Strahltrainingsanzeigeinformationen durchzuführen; und
Senden (S203) von Trainingsrückmeldungsinformationen durch den Initiator, wobei die Trainingsrückmeldungsinformationen Informationen über Strahlen umfassen, die für den einen oder die mehreren Antwortsender ausgewählt werden, wobei die für den einen oder die mehreren Antwortsender ausgewählten Strahlen Strahlen sind, die vom Initiator ausgewählt und von dem einen oder den mehreren Antwortsendern verwendet werden.

2. Verfahren nach Anspruch 1, wobei die Strahltrainingsanzeigeinformationen ferner umfassen:
Anzeigeinformationen eines Rückwärtszählwerts CDOWN im ersten Rahmen, der das Uplink-Trainingssignal überträgt und der vom Antwortsender gesendet wird; oder Anzeigeinformationen einer Menge von Rahmen, die das Uplink-Trainingssignal überträgt und die vom Antwortsender gesendet wird.

3. Verfahren nach Anspruch 1, wobei die Trainingsrückmeldungsinformationen ferner eines oder mehrere umfassen von Folgenden:
Signal-zu-Rausch-Verhältnisse der für den einen oder die mehreren Antwortsender ausgewählten Strahlen, Informationen über eine Mehrzahl von Strahlen, die für einen Antwortsender ausgewählt wird, Kanalzustandsrückmeldungsinformationen der Mehrzahl von Strahlen oder eine Menge von Kennungen der Antwortsender.

4. Verfahren nach Anspruch 1, wobei, wenn der Initiator die temporäre Kennung des Antwortsenders empfängt, eines oder mehrere von Folgenden in den Trainingsrückmeldungsinformationen als eine Kennung des Antwortsenders unter Verwendung der temporären Kennung verwendet werden:
die temporäre Kennung, eine Nummer eines optimalen Strahls, der vom Antwortsender rückgemeldet wird und der vom Antwortsender ausgewählt wird, und ein Verwürfelungscodefeld im Rahmen, der das Uplink-Trainingssignal überträgt und der vom Antwortsender gesendet wird.

5. Verfahren nach einem der Ansprüche 1 bis 4, wobei die Informationen über einen Strahl aus den vom Initiator ausgewählten und von dem einen oder den mehreren Antwortsendern verwendeten Strahlen umfassen:
eine oder mehrere von einer Nummer einer Antenne, einer Nummer einer Hochfrequenzkette oder einer Nummer eines Strahls, der zum Senden des Uplink-Trainingssignals verwendet wird.

6. Verfahren nach einem der Ansprüche 1 bis 4, wobei Ressourcen und/oder Trainingssequenzen, die verschiedenen Antwortsendern zugewiesen werden, in dem einen oder den mehreren Antwortsendern verschieden sind.

7. Strahltrainingsverfahren, umfassend:
Empfangen (S201) von Strahltrainingsanzeigeinformationen durch einen ersten Antwortsender, die von einem Initiator gesendet werden, wobei die Strahltrainingsanzeigeinformationen umfassen:
Identifikationsinformationen eines oder mehrerer Antwortsender, die am Strahltraining teilnehmen, und eine oder beide von Informationen über Ressourcen, die dem einen oder den mehreren Antwortsendern zugewiesen sind, und Informationen über Trainings sequenzen, die dem einen oder den mehreren Antwortsendern zugewiesen sind, wobei es sich bei den Identifikationsinformationen um ein Platzhalterzeichen handelt, wobei das Platzhalterzeichen angibt, dass der Initiator keinen Antwortsender spezifiziert, der an einem Uplink-Strahltraining teilnehmen soll;
Senden (S202) eines Uplink-Trainingssignals durch den ersten Antwortsender basierend auf den Strahltrainingsanzeigeinformationen an den Initiator, wobei das Senden eines Uplink-Trainingssignals durch den ersten Antwortsender basierend auf den Strahltrainingsanzeigeinformationen an den Initiator umfasst: Senden einer temporären Kennung durch den ersten Antwortsender an den Initiator, wenn der erste Antwortsender bestimmt, Strahltraining basierend auf den Strahltrainingsanzeigeinformationen durchzuführen; und
Empfangen (S203) von Trainingsrückmeldungsinformationen durch den ersten Antwortsender, die vom Initiator gesendet werden, wobei die Trainingsrückmeldungsinformationen Informationen über einen Strahl umfassen, der für den ersten Antwortsender ausgewählt wird, wobei der für den ersten Antwortsender ausgewählte Strahl ein Strahl ist, der vom Initiator ausgewählt und vom ersten Antwortsender verwendet wird.

8. Verfahren nach Anspruch 7, wobei die temporäre Kennung basierend auf einer Medienzugriffssteuerungs-, MAC-Adresse des ersten Antwortsenders erzeugt wird, oder nach dem Zufallsprinzip erzeugt wird, oder basierend auf der MAC-Adresse und einem Zufallswert des ersten Antwortsenders erzeugt wird.

9. Verfahren nach Anspruch 7, wobei das Verfahren vor dem Empfangen von Trainingsrückmeldungsinformationen durch den ersten Antwortsender ferner umfasst:
Senden eines CDOWN durch den ersten Antwortsender an den Initiator, wobei der CDOWN zum Anzeigen einer Reihenfolgenummer in umgekehrter Reihenfolge eines aktuellen Rahmens verwendet wird, der das Uplink-Trainingssignal überträgt, wobei
der CDOWN basierend auf durch die Strahltrainingsanzeigeinformationen angezeigten Anzeigeinformationen des CDOWN im ersten Rahmen, der das Uplink-Trainingssignal überträgt und der vom Antwortsender gesendet wird, oder basierend auf Anzeigeinformationen einer Menge von Rahmen bestimmt wird, die das Uplink-Trainingssignal überträgt und die vom Antwortsender gesendet wird.

10. Verfahren nach Anspruch 7, wobei das Verfahren vor dem Empfangen von Trainingsrückmeldungsinformationen durch den ersten Antwortsender ferner umfasst:
Senden einer oder mehrerer Nummern und entsprechender Qualitätsparameter, die durch den ersten Antwortsender empfangen werden, eines Rahmens, der die Strahltrainingsanzeigeinformationen überträgt, durch den ersten Antwortsender an den Initiator, wobei
der CDOWN im Rahmen, der das Strahltrainingsanzeigesignal überträgt, als eine Nummer des Rahmens verwendet wird, und die Qualitätsparameter Empfangssignalstärkeindikatoren-, RSSI-Signal-zu-Rausch-Verhältnisse, SNR, oder Signal-zu-Störung-plus-Rausch-Verhältnisse, SINR, umfassen.

11. Verfahren nach Anspruch 7, wobei das Verfahren vor dem Empfangen von Trainingsrückmeldungsinformationen durch den ersten Antwortsender ferner umfasst:
Senden von Informationen über einen optimalen Strahl, der vom ersten Antwortsender ausgewählt wird und der für den Initiator zum Senden von Downlink-Daten verwendet wird, durch den ersten Antwortsender an den Initiator.

12. Initiatorvorrichtung, umfassend:
einen Sender (100), der zum Senden von Strahltrainingsanzeigeinformationen konfiguriert ist, wobei die Strahltrainingsanzeigeinformationen umfassen: Identifikationsinformationen eines oder mehrerer Antwortsender, die am Strahltraining teilnehmen, und eine oder beide von Informationen über Ressourcen, die dem einen oder den mehreren Antwortsendern zugewiesen sind, und Informationen über Trainings sequenzen, die dem einen oder den mehreren Antwortsendern zugewiesen sind, wobei es sich bei den Identifikationsinformationen um ein Platzhalterzeichen handelt, wobei das Platzhalterzeichen angibt, dass der Initiator keinen Antwortsender spezifiziert, der an einem Uplink-Strahltraining teilnehmen soll; und
einen Empfänger (101), der zum Empfangen von Uplink-Trainingssignalen konfiguriert ist, die basierend auf den Strahltrainingsanzeigeinformationen durch den einen oder die mehreren Antwortsender gesendet werden, die am Strahltraining teilnehmen, wobei der Empfänger (101) ferner so konfiguriert ist, dass er eine temporäre Kennung eines Antwortsenders unter dem einen oder den mehreren Antwortsendern empfängt, der bestimmt, Strahltraining basierend auf den Strahltrainingsanzeigeinformationen durchzuführen, und
wobei
der Sender (100) ferner zum Senden von Trainingsrückmeldungsinformationen konfiguriert ist, wobei die Trainingsrückmeldungsinformationen Informationen über Strahlen umfassen, die für den einen oder die mehreren Antwortsender ausgewählt werden, wobei die für den einen oder die mehreren Antwortsender ausgewählten Strahlen Strahlen sind, die vom Initiator ausgewählt und von dem einen oder den mehreren Antwortsendern verwendet werden.

13. Antwortsendervorrichtung, umfassend:
einen Empfänger (101), der zum Empfangen von Strahltrainingsanzeigeinformationen konfiguriert ist, die von einem Initiator gesendet werden, wobei die Strahltrainingsanzeigeinformationen umfassen:
Identifikationsinformationen eines oder mehrerer Antwortsender, die am Strahltraining teilnehmen, und eine oder beide von Informationen über Ressourcen, die dem einen oder den mehreren Antwortsendern zugewiesen sind, und Informationen über Trainings sequenzen, die dem einen oder den mehreren Antwortsendern zugewiesen sind, wobei es sich bei den Identifikationsinformationen um ein Platzhalterzeichen handelt, wobei das Platzhalterzeichen angibt, dass der Initiator keinen Antwortsender spezifiziert, der an einem Uplink-Strahltraining teilnehmen soll; und
einen Sender (100), der zum Senden eines Uplink-Trainingssignals basierend auf den Strahltrainingsanzeigeinformationen an den Initiator konfiguriert ist, wobei der Sender (100) ferner zum Senden einer temporären Kennung an den Initiator konfiguriert ist, wenn der erste Antwortsender bestimmt, Strahltraining basierend auf den Strahltrainingsanzeigeinformationen durchzuführen, wobei der Empfänger (101) ferner zum Empfangen von Trainingsrückmeldungsinformationen konfiguriert ist, die vom Initiator gesendet werden, wobei die Trainingsrückmeldungsinformationen Informationen über einen Strahl umfassen, der für den ersten Antwortsender ausgewählt wird, wobei der für den ersten Antwortsender ausgewählte Strahl ein Strahl ist, der vom Initiator ausgewählt und vom ersten Antwortsender verwendet wird.

## Revendications

1. Procédé d'apprentissage de faisceau, comprenant :
l'envoi (S201), par un initiateur, d'informations d'indication d'apprentissage de faisceau, les informations d'indication d'apprentissage de faisceau comprenant : des informations d'identification d'un ou plusieurs répondeurs qui participent à l'apprentissage de faisceau, et des informations concernant des ressources allouées au ou aux répondeurs et/ou des informations concernant des séquences d'apprentissage allouées au ou aux répondeurs, les informations d'identification étant un caractère générique, le caractère générique indiquant que l'initiateur ne spécifie pas un répondeur qui doit participer à l'apprentissage de faisceau de liaison montante ;
la réception (S202), par l'initiateur, de signaux d'apprentissage de liaison montante envoyés sur la base des informations d'indication d'apprentissage de faisceau par le ou les répondeurs qui participent à l'apprentissage de faisceau, la réception, par l'initiateur, de signaux d'apprentissage de liaison montante envoyés sur la base des informations d'indication d'apprentissage de faisceau par le ou les répondeurs qui participent à l'apprentissage de faisceau comprenant : la réception, par l'initiateur, d'un identifiant temporaire d'un répondeur, parmi le ou les répondeurs, qui détermine de réaliser un apprentissage de faisceau sur la base des informations d'indication d'apprentissage de faisceau ; et
l'envoi (S203), par l'initiateur, d'informations de rétroaction d'apprentissage, les informations de rétroaction d'apprentissage comprenant des informations concernant des faisceaux sélectionnés pour le ou les répondeurs, les faisceaux sélectionnés pour le ou les répondeurs étant des faisceaux sélectionnés par l'initiateur et utilisés par le ou les répondeurs.

2. Procédé selon la revendication 1, les informations d'indication d'apprentissage de faisceau comprenant en outre :
des informations d'indication d'une valeur de décompte CDOWN dans la première trame qui porte le signal d'apprentissage de liaison montante et qui est envoyée par le répondeur ; ou des informations d'indication d'une quantité de trames qui portent le signal d'apprentissage de liaison montante et qui sont envoyées par le répondeur.

3. Procédé selon la revendication 1, les informations de rétroaction d'apprentissage comprenant en outre un ou plusieurs des éléments suivants :
des rapports signal sur bruit des faisceaux sélectionnés pour le ou les répondeurs, des informations concernant une pluralité de faisceaux sélectionnés pour un répondeur, des informations de rétroaction d'état de canal de la pluralité de faisceaux, ou une quantité d'identifiants des répondeurs.

4. Procédé selon la revendication 1, lorsque l'initiateur reçoit l'identifiant temporaire du répondeur, un ou plusieurs des éléments suivants dans les informations de rétroaction d'apprentissage étant utilisés comme un identifiant du répondeur utilisant l'identifiant temporaire :
l'identifiant temporaire, un numéro d'un faisceau optimal qui est renvoyé par le répondeur et qui est sélectionné par le répondeur, et un champ de code de brouillage dans la trame qui porte le signal d'apprentissage de liaison montante et qui est envoyée par le répondeur.

5. Procédé selon l'une quelconque des revendications 1 à 4, les informations concernant un faisceau parmi les faisceaux sélectionnés par l'initiateur et utilisés par le ou les répondeurs comprenant :
un ou plusieurs éléments parmi un numéro d'une antenne, un numéro d'une chaîne radiofréquence, ou un numéro d'un faisceau utilisé pour l'envoi du signal d'apprentissage de liaison montante.

6. Procédé selon l'une quelconque des revendications 1 à 4, des ressources et/ou des séquences d'apprentissage allouées à différents répondeurs dans le ou les répondeurs étant différentes.

7. Procédé d'apprentissage de faisceau, comprenant :
la réception (S201), par un premier répondeur, d'informations d'indication d'apprentissage de faisceau envoyées par un initiateur, les informations d'indication d'apprentissage de faisceau comprenant :
des informations d'identification d'un ou plusieurs répondeurs qui participent à l'apprentissage de faisceau, et des informations concernant des ressources allouées au ou aux répondeurs et/ou des informations concernant des séquences d'apprentissage allouées au ou aux répondeurs, les informations d'identification étant un caractère générique, le caractère générique indiquant que l'initiateur ne spécifie pas un répondeur qui doit participer à l'apprentissage de faisceau de liaison montante ;
l'envoi (S202), par le premier répondeur, d'un signal d'apprentissage de liaison montante à l'initiateur sur la base des informations d'indication d'apprentissage de faisceau, l'envoi, par le premier répondeur, d'un signal d'apprentissage de liaison montante à l'initiateur sur la base des informations d'indication d'apprentissage de faisceau comprenant : l'envoi, par le premier répondeur, d'un identifiant temporaire à l'initiateur si le premier répondeur détermine de réaliser un apprentissage de faisceau sur la base des informations d'indication d'apprentissage de faisceau ; et
la réception (S203), par le premier répondeur, d'informations de rétroaction d'apprentissage envoyées par l'initiateur, les informations de rétroaction d'apprentissage comprenant des informations concernant un faisceau sélectionné pour le premier répondeur, le faisceau sélectionné pour le premier répondeur étant un faisceau sélectionné par l'initiateur et utilisé par le premier répondeur.

8. Procédé selon la revendication 7, l'identifiant temporaire étant généré sur la base d'une adresse MAC de contrôle d'accès au support du premier répondeur, ou généré de manière aléatoire, ou généré sur la base de l'adresse MAC et d'une valeur aléatoire du premier répondeur.

9. Procédé selon la revendication 7, avant la réception, par le premier répondeur, d'informations de rétroaction d'apprentissage, le procédé comprenant en outre :
l'envoi, par le premier répondeur, d'une CDOWN à l'initiateur, la CDOWN étant utilisée pour indiquer un numéro de séquence dans l'ordre inverse d'une trame actuelle qui porte le signal d'apprentissage de liaison montante,
la CDOWN étant déterminée sur la base d'informations d'indication, indiquées par les informations d'indication d'apprentissage de faisceau, de CDOWN dans la première trame qui porte le signal d'apprentissage de liaison montante et qui est envoyée par le premier répondeur, ou sur la base d'informations d'indication d'une quantité de trames qui portent le signal d'apprentissage de liaison montante et qui sont envoyées par le premier répondeur.

10. Procédé selon la revendication 7, avant la réception, par le premier répondeur, d'informations de rétroaction d'apprentissage, le procédé comprenant en outre :
l'envoi, par le premier répondeur à l'initiateur, d'un ou plusieurs numéros et paramètres de qualité correspondants, reçus par le premier répondeur, d'une trame qui porte les informations d'indication d'apprentissage de faisceau, la CDOWN dans la trame qui porte le signal d'indication d'apprentissage de faisceau étant utilisée comme un numéro de la trame, et les paramètres de qualité comprenant des indicateurs de force de signal reçu, RSSI, des rapports signal sur bruit SNR, ou des rapports signal sur interférence plus bruit, SINR.

11. Procédé selon la revendication 7, avant la réception, par le premier répondeur, d'informations de rétroaction d'apprentissage, le procédé comprenant en outre :
l'envoi, par le premier répondeur à l'initiateur, d'informations concernant un faisceau optimal qui est sélectionné par le premier répondeur et qui est utilisé pour que l'initiateur envoie des données en liaison descendante.

12. Dispositif initiateur, comprenant :
un émetteur (100), configuré pour envoyer des informations d'indication d'apprentissage de faisceau, les informations d'indication d'apprentissage de faisceau comprenant : des informations d'identification d'un ou plusieurs répondeurs qui participent à l'apprentissage de faisceau, et des informations concernant des ressources allouées au ou aux répondeurs et/ou des informations concernant des séquences d'apprentissage allouées au ou aux répondeurs, les informations d'identification étant un caractère générique, le caractère générique indiquant que l'initiateur ne spécifie pas un répondeur qui doit participer à l'apprentissage de faisceau de liaison montante ; et
un récepteur (101), configuré pour recevoir des signaux d'apprentissage de liaison montante envoyés sur la base des informations d'indication d'apprentissage de faisceau par le ou les répondeurs qui participent à l'apprentissage de faisceau, le récepteur (101) étant en outre configuré pour recevoir un identifiant temporaire d'un répondeur, parmi le ou les répondeurs, qui détermine de réaliser un apprentissage de faisceau sur la base des informations d'indication d'apprentissage de faisceau, et
l'émetteur (100) étant en outre configuré pour envoyer des informations de rétroaction d'apprentissage, les informations de rétroaction d'apprentissage comprenant des informations concernant des faisceaux sélectionnés pour le ou les répondeurs, les faisceaux sélectionnés pour le ou les répondeurs étant des faisceaux sélectionnés par l'initiateur et utilisés par le ou les répondeurs.

13. Dispositif répondeur, comprenant :
un récepteur (101), configuré pour recevoir des informations d'indication d'apprentissage de faisceau envoyées par un initiateur, les informations d'indication d'apprentissage de faisceau comprenant :
des informations d'identification d'un ou plusieurs répondeurs qui participent à l'apprentissage de faisceau, et des informations concernant des ressources allouées au ou aux répondeurs et/ou des informations concernant des séquences d'apprentissage allouées au ou aux répondeurs, les informations d'identification étant un caractère générique, le caractère générique indiquant que l'initiateur ne spécifie pas un répondeur qui doit participer à l'apprentissage de faisceau de liaison montante ; et
un émetteur (100), configuré pour envoyer un signal d'apprentissage de liaison montante à l'initiateur sur la base des informations d'indication d'apprentissage de faisceau, l'émetteur (100) étant en outre configuré pour envoyer un identifiant temporaire à l'initiateur si le premier répondeur détermine de réaliser un apprentissage de faisceau sur la base des informations d'indication d'apprentissage de faisceau le récepteur (101) étant en outre configuré pour recevoir des informations de rétroaction d'apprentissage envoyées par l'initiateur, les informations de rétroaction d'apprentissage comprenant des informations concernant un faisceau sélectionné pour le premier répondeur, le faisceau sélectionné pour le premier répondeur étant un faisceau sélectionné par l'initiateur et utilisé par le premier répondeur.
